# EUROPÄISCHE PATENTANMELDUNG

(11) **EP 0 790 392 A1**
(43) Veröffentlichungstag der Anmeldung: **20.08.1997**
(21) Anmeldenummer: 96120671.1
(22) Anmeldetag: 20.12.1996
(51) Int. Cl.: F01N 7/18, F16L 27/02

(54) **Schiebesitz-Rohrverbindung**

(30) Priorität: 17.02.1996 DE 19606003
(71) Anmelder: MERCEDES-BENZ AG, 70327 Stuttgart (DE)
(72) Erfinder: Bonny, Pierre, 22589 Hamburg (DE); Sternal, Thorsten, 21647 Meisburg (DE)

(57) **Zusammenfassung**

Die Erfindung bezieht sich auf eine Rohrverbindung, bei der ein Endbereich eines ersten Rohres mittels Schiebesitz in einem zugehörigen Endbereich eines zweiten Rohres aufgenommen ist.

Erfindungsgemäß ist der Endbereich des ersten Rohres an seiner Außenseite mit einem radial nach außen vorstehenden Vorsprung oder der Endbereich des zweiten Rohres an seiner Innenseite mit einem radial nach innen vorstehenden Vorsprung derart versehen, daß der Endbereich des ersten Rohres mit seinem radial nach außen vorstehenden Vorsprung der Innenseite des Endbereichs des zweiten Rohres bzw. der Endbereich des zweiten Rohres mit seinem radial nach innen vorstehenden Vorsprung der Außenseite des Endbereichs des ersten Rohres höchstens linienförmig so gegenüberliegt, daß die beiden Rohrendbereiche axial gegeneinander verkippbar sind. Damit ist eine gewisse Schrägstellung der miteinander verbundenen Rohre ohne Beeinträchtigung des Schiebesitzes möglich.

Verwendung z.B. zur Verbindung von Rohrstücken in Abgasleitungssystemen für Kraftfahrzeuge.

## Beschreibung

Die Erfindung bezieht sich auf eine Rohrverbindung, bei der ein Endbereich eines ersten Rohres mittels Schiebesitz in einem zugehörigen Endbereich eines zweiten Rohres aufgenommen ist. Derartige Rohrverbindungen sind beispielsweise zur Verbindung verschiedener Rohrstücke bei Abgasleitungssystemen von Kraftfahrzeugen gebräuchlich.

So sind in der Offenlegungsschrift DE 36 14 180 A1 verschiedene Arten von Schiebesitz-Rohrverbindungen für Abgasleitungssysteme von Automobilen beschrieben. In einer ersten Variante ist der Endbereich eines ersten Rohres im radial aufgeweiteten Endbereich eines zweiten Rohres unter Bildung eines Ringspalts aufgenommen, der sich im Betrieb des Abgassystems dadurch schließt, daß sich der Endbereich des ersten Rohres aufgrund eines hindurchgeleiteten, heißen Abgasstromes erwärmt und folglich aufweitet, während der diesen sich aufweitenden Endbereich umgebende Endbereich des zweiten Rohres außenseitig mit der Umgebungsluft in Kontakt ist und sich daher weniger aufweitet. Im Betrieb liegen damit die beiden Endbereiche m gesamten Überlappungsbereich gleichmäßig und flächig gegeneinander an. In einer zweiten Variante, bei der ebenfalls ein Endbereich eines ersten Rohres in einem radial aufgeweiteten Endbereich eines zweiten Rohres aufgenommen ist, ist ein im Betrieb des Abgasleitungssystems bleibender Ringspalt zwischen den beiden sich überlappenden Endbereichen gebildet, der durch eine eingebrachte Dichtung abgedichtet wird. Um diese Dichtung gegen axiales Herausrutschen zu sichern, ist der Endbereich des ersten Rohres mit einer radial nach außen vorstehenden Ringwölbung versehen.

In der Patentschrift EP 0 232 953 B1 ist eine spannungsarme Abgasleitungsanordnung für eine Brennkraftmaschine offenbart, bei der einzelne Abschnitte eines inneren, abschirmender Rohrsystems, das außen von einer durch Gießen hergestellten Ummantelung umgeben ist, dadurch miteinander verbunden sind, daß zugehörige Rohrendbereiche, die durchmessergleich gebildet sind, mit ihren Stirnenden direkt aneinander anstoßend oder unter Belassung eines geringfügigen Axialspaltes zwischen den Stirnenden in einer umgebenden Verbindungshülse aufgenommen sind. Dabei besteht die Verbindungshülse zweiteilig aus einem axial kürzeren und einem axial längeren Hülsenteil, von denen jedes in einer zugehörigen Ausnehmung an der Innenseite des umgebenden Ummantelungsabschnitts mit fluchtendem Innenradius aufgenommen sind. Jeder der zwei von der Verbindungshülse aufgenommenen Rohrendbereiche weist eine radial nach außen vorstehende Ringwölbung auf, wobei die eine gegen den kürzeren Hülsenteil und die andere gegen den längeren Hülsenteil anliegt. Dabei erstreckt sich der längere Verbindungshülsenteil axial über den Spalt zwischen den beiden Endbereichen hinweg. Die radial nach außen vorstehenden Ringwölbungen an den Rohrendbereichen dienen zur Schaffung eines jeweiligen, thermisch isolierenden Ringspaltes zwischen innerem Rohrabschnitt und umgebender Ummantelung, indem der innere Rohrabschnitt nur in seinen Endbereichen gegen die jeweilige Verbindungshülse und ansonsten nicht direkt gegen die äußere Ummantelung abgestützt ist.

Der Erfindung liegt als technisches Problem die Bereitstellung einer Rohrverbindung der eingangs genannten Art zugrunde, die nicht nur axiale Bewegungen, sondern auch Schrägstellungsbewegungen zwischen den zu verbindenden Rohren ohne wesentliche Beeinträchtigung der Schiebesitzeigenschaften zuläßt.

Dieses Problem wird durch eine Rohrverbindung mit den Merkmalen des Anspruchs 1 gelöst. Bei dieser Schiebesitz-Rohrverbindung liegt höchstens eine linienförmige Berührung der beiden sich überlappenden Rohrendbereiche entlang einer umlaufenden Kreislinie vor, die durch die axiale Höhe des maximalen Außendurchmessers eines radial nach außen vorstehenden Vorsprungs an der Außenseite des inneren Endbereiches oder durch die axiale Höhe des minimalen Innendurchmessers eines radial nach innen vorstehenden Vorsprungs an der Innenseite des äußeren Endbereiches definiert ist. Die Gestaltung des radial nach außen bzw. nach innen weisenden Vorsprungs ist so gewählt, daß dieser rohrverbindende Schiebesitz mit höchstens umlaufender Linienberührung der Rohrendbereiche eine gewisse Schrägstellung der miteinander verbundenen Rohre zuläßt, ohne daß dies zum Verklemmen und damit zur Behinderung der durch den Schiebesitz beabsichtigten freien Ausdehnbarkeit der miteinander verbundenen Rohre führt. Eine solche Schrägstellungsbewegung ist bei herkömmlichen Schiebesitzen mit über eine gewisse axiale Länge ganzflächiger Berührung der überlappenden Rohrendbereiche nicht möglich.

In einer Weiterbildung der Erfindung nach Anspruch 2 ist der Vorsprung als kontinuierlich umlaufende Ringwölbung gestaltet.

In einer alternativen Weiterbildung gemäß Anspruch 3 ist der Vorsprung von mehreren einzelnen, über den Rohrumfang verteilt angeordneten Distanzwarzen gebildet.

In einer Weiterbildung der Erfindung nach Anspruch 4 ist vorgesehen, daß der Vorsprung an dem gegenüberliegenden Rohrendbereich ohne Abstand punktuell oder linienförmig anliegt oder demselben über einen umlaufenden Spalt beabstandet gegenüberliegt. Bei Verwendung als Rohrverbindung in einem Abgassystem hat dies den Vorteil, daß in der Aufheizphase oder aber auch in der Phase mit Temperaturgleichgewicht unterschiedliche Ausdehnungsverhältnisse zwischen dem einem und dem anderen Rohrendbereich, beispielsweise infolge der Verwendung unterschiedlicher Materialien mit unterschiedlichen Ausdehnungskoeffizienten oder infolge großer Massenunterschiede zwischen den gefügten Rohrenden, kompensiert werden können. Es tritt dann kein schiebebewegungsverhinderndes Verpressen der Bauteile gegeneinander auf.

Bevorzugte Ausführungsformen der Erfindung sind in den Zeichnungen dargestellt und werden nachfolgend beschrieben. Hierbei zeigen:
- Fig. 1: eine schematische Seitenansicht eines Teils eines Abgasleitungssystems für ein Kraftfahrzeug mit zwei über eine Schiebesitz-Rohrverbindung verbundenen Rohren,
- Fig. 2: eine Detaillängsschnittansicht des Bereichs I von Fig. 1 mit einer ersten Schiebesitzvariante,
- Fig. 3: eine Ansicht entsprechend Fig. 2, jedoch mit einer zweiten Schiebesitzvariante,
- Fig. 4: eine Ansicht entsprechend Fig. 1, jedoch in einem Zustand gegeneinander schräg gestellter Rohre,
- Fig. 5: eine Detaillängsschnittansicht des Bereichs II von Fig. 4 für die Schiebesitzvariante von Fig. 2,
- Fig. 6: eine Ansicht entsprechend Fig. 5, jedoch für die Schiebesitzvariante von Fig. 3,
- Fig. 7: eine Längsschnittansicht eines Anschlußbereichs eines Abgaskrümmers für ein Kraftfahrzeug mit einer Schiebesitz-Rohrverbindung,
- Fig. 8: eine Ansicht entsprechend Fig. 2, jedoch für eine Schiebesitzvariante mit umlaufendem Spalt und
- Fig. 9: eine Seitenansicht eines Rohrendbereiches mit eingeprägten Distanzwarzen für eine weitere Schiebesitzvariante.

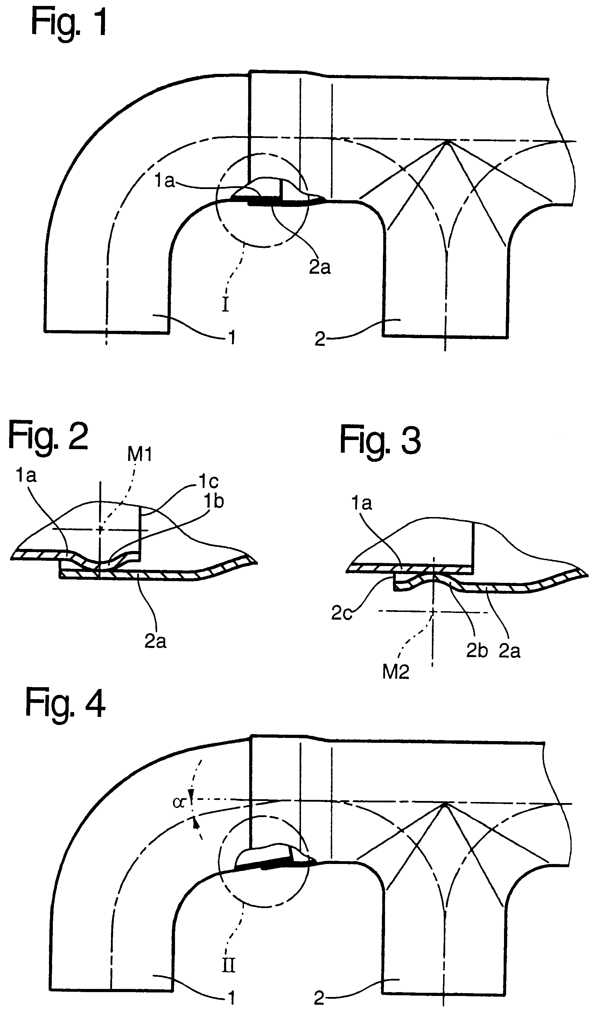

Fig. 1 zeigt in einer Seitenansicht eine Schiebesitz-Rohrverbindung, über die ein erstes Rohr in Form eines Rohrbogens (1) mit einem zweiten Rohr in Form eines T-Rohrstücks (2) verbunden ist, wobei diese beiden Rohre (1, 2) Teil eines nicht weiter gezeigten Abgasleitungssystems eines Automobils sind. Wie aus Fig. 1 zu erkennen, ist die Schiebesitz-Rohrverbindung dadurch realisiert, daß der Rohrbogen (1) mit seinem einen Endbereich (1a) in einem zugehörigen Endbereich (2a) des T-Rohrstücks (2) aufgenommen ist, wozu dieser Endbereich (2a) des T-Rohrstücks (2) etwas aufgeweitet ist, während der Rohrdurchmesser im übrigen Bereich des T-Rohrstücks (2) demjenigen des Rohrbogens (1) entspricht.

In den Fig. 2 und 3 sind zwei unterschiedliche Varianten einer erfindungsgemäßen Gestaltung des in Fig. 1 nur schematisch angedeuteten Schiebesitzes detaillierter dargestellt, wobei die überlappenden Rohrendbereiche (1a, 2a) des Rohrbogens (1) einerseits und des T-Rohrstücks (2) andererseits in den beiden Figuren 2 und 3 trotz ihrer variierten Gestaltung mit den gleichen Bezugszeichen bezeichnet sind, um in einfacher Weise den Bezug zu Fig. 1 herzustellen. Bei der Variante von Fig. 2 besitzt der gegenüber dem restlichen Teil des T-Rohrstücks (2) radial aufgeweitete Endbereich (2a), der den Endbereich (1a) des Rohrbogens (1) aufnimmt, einen konstanten Innendurchmesser. Demgegenüber weist der aufgenommene Endbereich (1a) des Rohrbogens (1) eine über seinen ansonsten konstanten Außendurchmesser radial nach außen vorstehende Ringwölbung in Form einer ringförmigen Ausbauchung (1b) auf, die in der gezeigten Längsschnittebene einen kreisbogenförmigen Verlauf besitzt. Dabei liegt der Krümmungskreismittelpunkt (M1) dieses Kreisbogens in radialer Richtung zwischen der Rohrbogenlängsachse und der Rohrbogeninnenwand und in Axialrichtung mit Abstand zum zugehörigen Rohrbogenstirnabschluß (1c) innerhalb der axialen Erstreckung des Rohrendbereiches (1a). Bei der Schiebesitzvariante von Fig. 3 besitzt der im Endbereich (2a) des T-Rohrstücks (2) aufgenommene Endbereich (1a) des Rohrbogens (1) einen glatten zylindrischen Verlauf mit konstantem Außendurchmesser, während der radial aufgeweitete Endbereich (2a) des T-Rohrstücks (2) eine radial nach innen vorstehende Ringwölbung in Form einer radial nach innen eingedrückten Sicke (2b) aufweist. Im gezeigten Längsschnitt verläuft die Sicke (2b) kreisbogenförmig, wobei sich der zugehörige Krümmungskreismittelpunkt (M2) radial außerhalb des Rohraußenumfangs befindet und in Axialrichtung vom zugehörigen Rohrstirnabschluß (2c) beabstandet innerhalb der axialen Erstreckung des Rohrendbereichs (2a) liegt.

Wie aus der Figuren 2 und 3 zu erkennen, ist das Maß, um das die radiale Ausbauchung (1b) maximal über den sonstigen Außendurchmesser des aufgenommenen Rohrendbereichs (1a) radial hinausragt bzw. um das die Sicke (2b) den Rohrinnendurchmesser des aufnehmenden Endbereichs (2a) maximal verengt, jeweils so gewählt, daß der aufgenommene Rohrendbereich (1a) und der aufnehmende Rohrendbereich (2a) im wesentlichen nur längs einer Kreislinie gegeneinander anliegen, die in derjenigen Axialebene liegt, in welcher die Ausbauchung (1b) ihren maximalen Außendurchmesser bzw. die Sicke (2b) ihren minimalen Innendurchmesser besitzt. Wie weiter aus den Figuren 2 und 3 erkennbar, kann der aufgenommene Rohrendbereich (1a) in einem erforderlichen Maße axial innerhalb des aufnehmenden Rohrendbereichs (2a) verschoben werden, ohne daß die durch die Ausbauchung (1b) bzw. die Sicke (2b) erreichte Linienberührung zwischen den überlappenden Rohrendbereichen (1a, 2a) verloren geht. Dabei sind die Rohrdurchmesser der am Schiebesitz beteiligten Rohrendbereiche (1a, 2a) so gewählt, daß der aufnehmende, äußere Rohrendbereich (2a) längs der Linienberührung mit einer gewissen Anpreßkraft radial gegen den inneren, aufgenommenen Rohrendbereich (1a) andrückt. Da die Ausbauchung (1b) bzw. die Sicke (2b) in Richtung zugehörigem Rohrstirnabschluß (1c, 2c) jeweils wieder auf den ursprünglichen Rohrdurchmesser zurückgeführt werden, kann der aufgenommene Rohrendbereich (1a) in beiden Varianten problemlos axial in den aufnehmenden Rohrendbereich (2a) eingefügt werden.

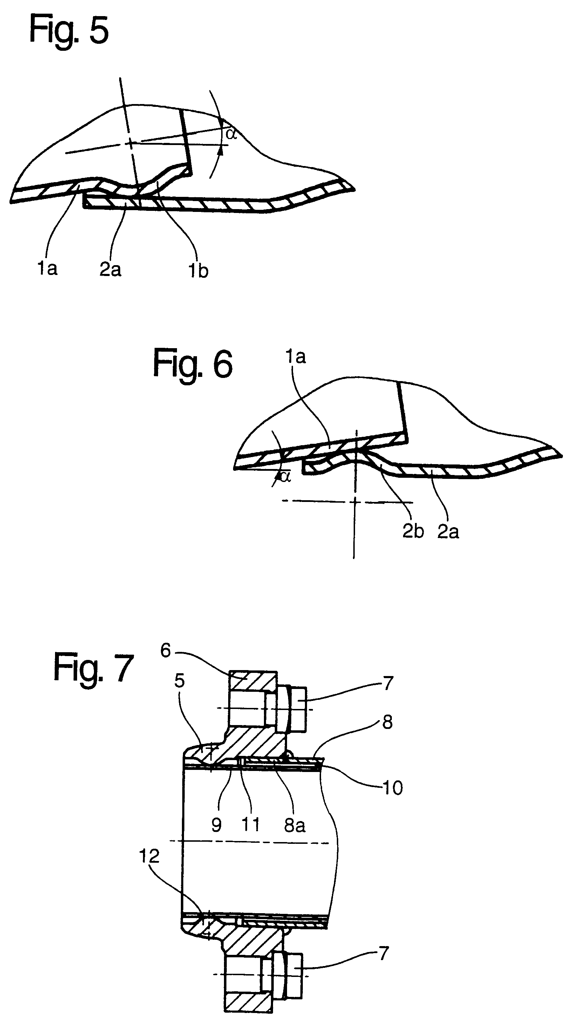

Die gezeigten Schiebesitz-Rohrverbindungen mit im wesentlichen auf eine Axialebene beschränkter, kreislinienförmiger Anlage der beiden sich überlappenden Rohrendbereiche (1a, 2a) haben gegenüber herkömmlichen Schiebesitz-Rohrverbindungen mit ganzflächiger Anlage der beiden Rohrendbereiche längs des gesamten überlappenden Rohrmantelbereichs vor allem den Vorteil, daß eine Schrägstellung der solchermaßen miteinander verbundenen Rohre (1, 2) nicht zum Verklemmen derselben innerhalb des Schiebesitzes führt, so daß auch in dieser Situation eine freie Ausdehnung dieser Rohre (1, 2) im Verbindungsbereich, z.B. wegen unterschiedlicher thermischer Belastung, gewährleistet ist. Dies ist anhand der Figuren 4 bis 6 näher veranschaulicht. Fig. 4 zeigt die beiden miteinander verbundenen Rohre von Fig. 1, d.h. den Rohrbogen (1) und das T-Rohrstück (2), in einer derartigen Schrägstellung, bei der im Bereich der Schiebesitz-Rohrverbindung die Rohrlängsachsen von Rohrbogen (1) einerseits und T-Rohrstück (2) andererseits um einen Winkel α größer Null gegeneinander verkippt sind. Die Figuren 5 und 6 zeigen genauer die sich daraus ergebende Schrägstellungslage für die Schiebesitz-Rohrverbindungsvarianten von Fig. 2 bzw. Fig. 3.

Wie aus Fig. 5 zu erkennen, läßt die ringförmige Ausbauchung (1b) das Verkippen des aufgenommenen Rohrendbereichs (1a) gegenüber dem aufnehmenden Rohrendbereich (2a) um diesen Kippwinkel α zu, ohne daß sich die überlappenden Endbereiche (1a, 2a) gegenseitig verklemmen oder es zur Verformung eines oder beider Rohrendbereiche (1a, 2a) kommt, solange der Kippwinkel α unterhalb eines zulässigen Maximalwertes bleibt. Ermöglicht wird dies dadurch, daß beim Schrägstellen der beiden zusammenwirkenden Rohrendbereiche (1a, 2a) der aufnehmende Rohrendbereich (2a) mit seiner Innenseite an der Außenseite der Ausbauchung (1b) verkippend entlanggleitet, so daß die andrückende Anlage des aufnehmenden Rohrendbereichs (2a) gegen die Ausbauchung (1b) des aufgenommenen Rohrendbereichs (1a) längs einer in einer Axialebene liegenden Kreislinie vollständig erhalten bleibt. Die entsprechenden Eigenschaften ergeben sich analog bei der Schrägstellung der beiden zusammenwirkenden Rohrendbereiche (1a, 2a) in der anderen Schiebesitz-Rohrverbindungsvariante, wie in Fig. 6 dargestellt. In diesem Fall gleitet der aufgenommene Rohrendbereich (1a) mit seiner Rohrmantelaußenseite verkippend entlang des durch die radial nach innen vorgewölbte Sicke (2b) senkrecht zur Umfangsrichtung gegebenen Kreisbogenverlaufs des aufnehmenden Rohrendbereichs (2a). Auch hier bleibt die anpressende, kreislinienförmige Anlage des aufnehmenden Rohrendbereichs (2a) mit seiner ringförmig umlaufenden Sicke (2b) gegen die Außenseite des aufgenommenen Rohrendbereichs (1a) auf Höhe einer bestimmten Axialebene vollständig erhalten, ohne daß es zum Verklemmen der sich überlappenden Rohrendbereiche (1a, 2a) und damit zu einem Versagen der Schiebesitz-Rohrverbindung kommt, solange der Kippwinkel der schräggestellten Rohrendbereiche (1a, 2a) unter einem vorgegebenen Maximalwert bleibt.

Fig. 7 zeigt ein weiteres Beispiel einer erfindungsgemäßen Schiebesitz-Rohrverbindung für den Anschlußbereich eines luftspaltisolierten Abgaskrümmers eines Abgasleitungssystems für ein Automobil. Dieser Anschlußbereich beinhaltet eine rohraufnehmende Rohrhülse (5) und einen mit dieser einstückigen Radialflansch (6), der mehrere Bohrungen für Schraubverbindungen (7) zu Befestigungszwecken aufweist. Von der Rohrhülse (5) ist zum einen durchgehend ein Innenrohr (9) und zum anderen der Endbereich (8a) eines Schutzrohres (8) aufgenommen, welches das Innenrohr (9) unter Bildung eines isolierenden, ringförmigen Luftspaltes (10) koaxial mit Abstand umgibt. Das Schutzrohr (8) erstreckt sich dabei bis zu einer hierfür in der Rohrhülse (5) innenseitig vorgesehenen Ringschulter (11). Innerhalb eines nicht mehr vom Schutzrohr (8) abgedeckten Bereichs weist die Rohrhülse (5) innenseitig eine radial nach innen vorstehende Ringwölbung (12) auf, gegen die das Innenrohr (9) umlaufend im wesentlichen linienförmig auf Höhe derjenigen Axialebene anliegt, auf der die Ringwölbung (12) den Innendurchmesser der Rohrhülse (12) am stärksten verengt.

Dies realisiert einen Schiebesitz für das Innenrohr (9) in der Rohrhülse (5), der nicht nur ein axiales Verschieben des Innenrohrs (9) gegenüber der Rohrhülse (5) sondern auch ein gewisses Verkippen der beiden Bauteile (5, 9) gegeneinander zuläßt, ohne daß die Eigenschaften dieser Schiebesitz-Rohrverbindung hinsichtlich Halterung des Innenrohrs (9) in der Rohrhülse (5) und Abdichtung des Bereichs zwischen Innenrohr (9) und Rohrhülse (5) verlorengehen, solange der Kippwinkel nicht zu groß wird. Insbesondere erlaubt diese durch die radial nach innen vorstehende Ringwölbung (12) erzielte Schiebesitz-Rohrverbindung mit kreislinienförmiger Anlage des Innenrohrs (9) im Gegensatz zu einer vollflächigen Anlage desselben (9) am gesamten, nicht vom Schutzrohr (8) eingenommenen Innenflächenbereich der Rohrhülse (5) problemlos ein gewisses Verschieben und Verstellen des Innenrohrs (9) gegenüber der dieses aufnehmenden Rohrhülse (5) in einem Maße, die es typischerweise aufgrund von thermischen Belastungen in derartigen luftspaltisolierten Abgaskrümmern von Automobilen auftritt.

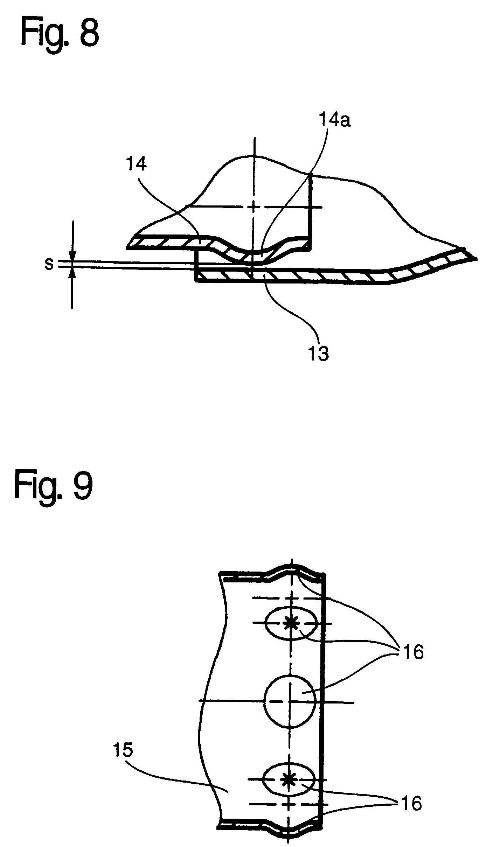

In Fig. 8 ist eine Modifikation der Schiebesitz-Rohrverbindung von Fig. 2 gezeigt. Bei dieser Modifikation sind in Entsprechung zu Fig. 2 ein aufgeweiteter Rohrendbereich (13) und ein davon aufgenommener Rohrendbereich (14) vorgesehen, von denen letzterer wiederum eine umlaufende, radial nach außen vorstehende Ringwölbung (14a) besitzt. Im Gegensatz zur Variante von Fig. 2 liegt jedoch bei dieser Gestaltung der Schiebesitz-Rohrverbindung die Ringwölbung (14a) dem aufnehmenden Rohrendbereich unter Belassung eines umlaufenden Ringspalts vorgegebener Breite (s) mit Abstand gegenüber. Dies erleichtert in Fällen, in denen die Rohrverbindung nicht dicht zu sein braucht, das Montieren der Rohre ineinander. Bei Einsatz dieser Rohrverbindung in einem Kraftfahrzeug-Abgassystem hat das Vorsehen des umlaufenden Radialspaltes den zusätzlichen Vorteil, daß unterschiedliche Ausdehnungsverhältnisse zwischen den beiden Rohrendbereichen (13, 14) z.B. aufgrund der Verwendung unterschiedlicher Materialien mit verschiedenen Ausdehnungskoeffizienten oder infolge großer Massenunterschiede zwischen den gefügten Rohrendbereichen (13, 14) auch in der Aufheizphase kompensiert werden können, ohne daß ein die Schiebebewegung verhinderndes Verpressen der Rohrbauteile auftritt. Eine entsprechende Fügung der Rohrendbereiche ineinander unter Bildung eines Abstandsspaltes ist selbstverständlich analog für die Schiebesitzvariante von Fig. 3 möglich.

Fig. 9 zeigt einen zur Herstellung einer erfindungsgemäßen Schiebesitz-Rohrverbindung geeigneten Rohrendbereich (15), der als radial nach außen vorstehenden Vorsprung alternativ zu den in den vorstehenden Beispielen gezeigten, umlaufenden Ringwölbungen von mehreren, gleichmäßig über den Rohrumfang verteilt angeordneten, geprägten Distanzwarzen (16) gebildet ist, von denen in der Rohrseitenansicht von Fig. 9 fünf zu erkennen sind. Die Distanzwarzen (16) erheben sich im gezeigten Beispiel von einer kreisförmigen Grundlinie kuppelförmig radial nach außen. Der mit diesen Distanzwarzen (16) versehene Rohrendbereich (15) kann dann zur Realisierung einer erfindungsgemäßen Schiebesitz-Rohrverbindung in einen aufnehmenden Rohrendbereich, z.B. entsprechend den Fig. 2 und 8, eingeschoben werden. Es versteht sich, daß bei Bedarf in analoger Weise ein aufnehmender Rohrendbereich statt mit einer umlaufenden, radial nach innen eingedrückten Sicke, wie im Fall von Fig. 3, mit mehreren, über den Umfang gleichmäßig verteilten, radial nach innen eingeprägten Distanzwarzen versehen sein kann.

Es versteht sich, daß die Verwendung einer erfindungsgemäßen Schiebesitz-Rohrverbindung nicht auf die gezeigten Beispiele und nicht auf Abgasleitungssysteme beschränkt ist, sondern vielmehr überall dort in Betracht kommt, wo zwei Rohre so miteinander verbunden werden sollen, daß sie sich in gewissem Maße gegeneinander verkippen und axial bewegen können, ohne daß die gewünschte umlaufende Anlage der beiden überlappenden Rohrendbereiche aneinander verloren geht.

## Patentansprüche

1. Rohrverbindung, bei der
- ein Endbereich (1a) eines ersten Rohres (1) mittels Schiebesitz in einem zugehörigen Endbereich (2a) eines zweiten Rohres (2) aufgenommen ist,
**dadurch gekennzeichnet, daß**
- der Endbereich (1a) des ersten Rohres (1) an seiner Außenseite mit einem radial nach außen vorstehenden Vorsprung (1b) oder der Endbereich (2a) des zweiten Rohres (2) an seiner Innenseite mit einem radial nach innen vorstehenden Vorsprung (2b) derart versehen ist, daß der Endbereich des ersten Rohres mit seinem radial nach außen vorstehenden Vorsprung der Innenseite des Endbereiches des zweiten Rohres bwz. der Endbereich des zweiten Rohres mit seinem radial nach innen vorstehenden Vorsprung der Außenseite des Endbereiches des ersten Rohres höchstens linienförmig anliegend derart gegenüberliegt, daß die beiden Rohrendbereiche (1a, 2a) axial gegeneinander verkippbar sind.

2. Rohrverbindung nach Anspruch 1, weiter
**dadurch gekennzeichnet, daß**
der Vorsprung als umlaufende Ringwölbung (1b, 2b) gestaltet ist.

3. Rohrverbindung nach Anspruch 1, weiter
**dadurch gekennzeichnet, daß**
der Vorsprung von mehreren, über den Rohrumfang verteilt angeordneten Distanzwarzen (16) gebildet ist.

4. Rohrverbindung nach einem der Ansprüche 1 bis 3, weiter
**dadurch gekennzeichnet, daß**
der Vorsprung des einen Rohrendbereiches an mehreren Punkten oder linienförmig gegen den anderen Rohrendbereich anliegt oder dem anderen Rohrendbereich unter Bildung eines umlaufenden Spaltes (s) mit Abstand gegenüberliegt.
